# EUROPÄISCHE PATENTSCHRIFT

(11) **EP 4 464 725 B1**
(45) Veröffentlichungstag und Bekanntmachung des Hinweises auf die Patenterteilung: **25.03.2026**
(21) Anmeldenummer: 24172255.2
(22) Anmeldetag: 24.04.2024
(51) Int. Cl.: B07B 1/00, B07B 4/00

(54) **TRENNVORRICHTUNG ZUM ABTRENNEN VON IN NATURKAUTSCHUK AUS PFLANZENMATERIAL ENTHALTENDEN VERUNREINIGUNGEN**
SEPARATION DEVICE FOR SEPARATING IMPURITIES CONTAINED IN NATURAL RUBBER FROM PLANT MATERIAL
DISPOSITIF DE SÉPARATION POUR SÉPARER DES IMPURETÉS CONTENUES DANS DU CAOUTCHOUC NATUREL D'UNE MATIÈRE VÉGÉTALE

(30) Priorität: 08.05.2023 DE 102023204233
(43) Veröffentlichungstag der Anmeldung: 20.11.2024
(73) Patentinhaber: Continental Reifen Deutschland GmbH, 30175 Hannover (DE)
(72) Erfinder: Herzog, Katharina, 30175 Hannover (DE); Recker, Carla, 30175 Hannover (DE); Reuschel, Annika, 30175 Hannover (DE); Fichtner, Clemens, 18051 Rostock (DE); Pankratz, Jonas, 30175 Hannover (DE)
(74) Vertreter: Continental Corporation

(56) Entgegenhaltungen:
- EP-B1- 2 268 675
- DE-A1- 102013 107 279
- US-A1- 2009 030 156

## Beschreibung

Die Erfindung betrifft eine Trennvorrichtung zum Abtrennen von in Naturkautschuk aus Pflanzenmaterial enthaltenden Verunreinigungen mit einer Vorrichtung zur Aufnahme des Naturkautschuks mit den enthaltenden Verunreinigungen, wobei die Vorrichtung einen Mechanismus, der Impulse auf den Naturkautschuk überträgt aufnimmt, wobei der Mechanismus von einem Motor der Trennvorrichtung angetrieben wird. Die Trennvorrichtung weist weiterhin eine Gaszuführung und eine Gasabführung zum Erzeugen einer Durchströmung der Vorrichtung mit einem Gas und zum Abführen der Verunreinigungen auf.

Weiterhin betrifft die Erfindung ein Verfahren zum Betreiben einer Trennvorrichtung sowie mit dem Verfahren von Verunreinigungen getrennten Naturkautschuk.

Trennvorrichtungen zum Trennen von verschiedenen miteinander verbundenen Stoffen sind in unterschiedlichen Ausführungsformen bekannt. Eine Trennvorrichtung zum Trennen von unvulkanisiertem gummierten Stahlcord in Gummierungen und den Stahlcord ist aus der DE10 2008 035963 B3 bekannt. Die gummierten Stahlcorde werden mit einem pulverförmigen Trennmittel in eine Trennvorrichtung gegeben und mittels eines rotierenden Werkzeugs voneinander getrennt. Die Gummierungen sowie die Stahlcorde werden der Trennvorrichtung nach dem Trennvorgang entnommen.

Aus der DE 10 2013 107 279 A1 ist ein Verfahren zur Gewinnung von Naturkautschuk aus Löwenzahn bekannt, in dem Wurzelmaterial von Löwenzahn mittels Braunfäule vorbehandelt wird. Das durch die Braunfäule zersetzte Wurzelmaterial wird mechanisch zerkleinert, bevor der Naturkautschuk von den weiteren Bestandteilen getrennt wird.

Vor diesem Hintergrund liegt der Erfindung die Aufgabe zugrunde, eine Trennvorrichtungen und ein Verfahren zum Abtrennen von Verunreinigungen von Naturkautschuk derart auszuführen, dass die Verunreinigungen effizient vom Naturkautschuk getrennt werden, wobei der Naturkautschuk keine oder lediglich eine geringe Qualitätsminderung erfährt.

Diese Aufgabe wird gelöst mit einer Trennvorrichtung gemäß den Merkmalen des Patentanspruches 1 sowie einem Verfahren gemäß eines nebengeordneten Anspruchs. Die Unteransprüche betreffen besonders zweckmäßige Weiterbildungen der Erfindung.

Erfindungsgemäß ist also eine Trennvorrichtung zum Abtrennen von in Naturkautschuk aus Pflanzenmaterial enthaltenden Verunreinigungen mit einer Vorrichtung zur Aufnahme des Naturkautschuks mit den enthaltenden Verunreinigungen vorgesehen, wobei die Vorrichtung einen Mechanismus aufnimmt, wobei der Mechanismus von einem Motor der Trennvorrichtung angetrieben wird, und einer Gaszuführung und einer Gasabführung zum Erzeugen einer Durchströmung der Vorrichtung mit einem Gas und zum Abführen der Verunreinigungen, wobei der Mechanismus dazu eingerichtet ist die Verunreinigungen innerhalb der Vorrichtung zu fördern.

Der angetriebene Mechanismus tritt mit dem Gemisch aus Naturkautschuk und den Verunreinigungen in Kontakt und überträgt einen mechanischen Impuls auf dieses. Durch den Impuls und der geeigneten Geometrie des Mechanismus werden am Naturkautschuk neue Oberflächen erzeugt, die vorliegenden Naturkautschukflocken werden aufgerissen oder zerteilt. Hierdurch werden die enthaltenden, also sich im Naturkautschuk befindlichen, also von dem Naturkautschuk umschlossenen, Verunreinigungen freigelegt und von dem Naturkautschuk getrennt. Durch die übertragenen Impulse werden der Naturkautschuk und die Verunreinigungen innerhalb der Vorrichtung gefördert.

Die innerhalb der Vorrichtung geförderten Verunreinigungen werden von der Durchströmung der Vorrichtung erfasst, in Richtung der Gasabführung befördert und durch diese aus der Vorrichtung entfernt. Der Naturkautschuk verbleibt aufgrund seiner höheren Masse sowie kleinerem Oberflächen-zu-Volumen-Verhältnis im Behältnis.

Im Sinne der Erfindung wird unter Abführen des Gases verstanden, dass aufgrund einer Druckdifferenz zwischen dem Vorrichtungsinnenraum und der Gasabführung das Gas mitsamt Verunreinigungen aus der Vorrichtung durch die Gasabführung gefördert wird.

Auch bei gleichen oder zumindest ähnlichen Dichten des Naturkautschuks und der Verunreinigungen findet eine effektive Trennung der Verunreinigungen vom Naturkautschuk aufgrund der durch den Mechanismus und der Durchströmung erzeugten Kräfte statt. Der Mechanismus trifft auf den Naturkautschuk, der aufgerissen oder zerteilt wird. Verunreinigungen werden vom und aus dem Naturkautschuk gelöst. Weiterhin werden der Naturkautschuk und die Verunreinigungen durch den Mechanismus in eine Flugbewegung versetzt. Die Verunreinigungen weisen hierbei eine zu dem Naturkautschuk abweichende Flugbahn auf, da der Gasstrom auf die Kautschukpartikel eine kleinere Kraft relativ zu ihrer Masse erzeugt als bei Verunreinigungen, die aufgrund ihrer Größe und Geometrie ein größeres Oberflächen-zu-Volumen-Verhältnis aufweisen.

Die geometrische Gestaltung des Mechanismus sowie die verwendete Drehzahl des Mechanismus können hierbei so gewählt werden, dass der Naturkautschuk keine oder zumindest keine größeren Qualitätsminderungen erfährt.

Unter Gaszuführung wird eine Zuführung zum Zuführen eines Gases aufgrund eines Differenzdrucks zwischen der Gaszuführung und der Vorrichtung verstanden. Es handelt sich um eine Öffnung durch die Gas in die Vorrichtung strömt.

Eine bevorzugte Ausführungsform sieht vor, dass es sich bei dem Naturkautschuk aus Pflanzenmaterial von Pflanzen handelt, die Mitglieder der Asteraceae, wie Taraxacum sp. oder Scorzonera sp., insbesondere Taraxacum kok-saghyz, Taraxacum krim-saghyz, Taraxacum bicorne, Taraxacum brevicorniculatum, oder Scorzonera tau-saghyz, Scorzonera Uzbekistanica, Scorzonera teke-saghyz, Scorzonera hispanica, Scorzonera tausaghyz, oder Guayule (Parthenium argentatum), oder auch andere Spezies wie Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense, oder Silphium sp., oder Mischungen dieser Pflanzen sowie natürlich vorkommende oder gezüchtete Hybride mit mindestens einer der vorgenannten Spezies sind, wobei als Hybride alle Ausprägungsformen mischerbiger Pflanzen anzusehen sind. Diese Pflanzen haben sich als besonders geeignet zur Gewinnung von Naturkautschuk erwiesen.

Eine bevorzugte Ausführungsform sieht vor, dass es sich bei dem Naturkautschuk aus Pflanzenmaterial um Naturkautschuk mit einem Trockenrückstand von größer als 0,7 handelt, besonders bevorzugt größer als 0,8 handelt. Ein Flüssigkeitsanteil von kleiner als 30 % bei dem zu verarbeitenden Naturkautschuk hat sich für die Verarbeitung als vorteilhaft erwiesen.

Eine bevorzugte Ausführungsform sieht vor, dass die Vorrichtung eine zylinderförmige und beziehungsweise oder trichterförmige Innengeometrie aufweist. Eine zylinderförmige Geometrie der Vorrichtung hat sich als besonders effektiv zum Trennen des Naturkautschuks von den Verunreinigungen erwiesen. Eine trichterförmige Geometrie der Vorrichtung kann vorteilhaft sein, da Bereiche mit einer sehr geringen Bewegung des Naturkautschuks oder der Verunreinigungen verkleinert oder eliminiert werden und dadurch eine besonders effektive Trennung erreicht wird. Unter einer zylinderförmigen und trichterförmigen Innengeometrie wird insbesondere eine Innengeometrie verstanden, die in einem oberen Bereich zylinderförmig ist und im unteren Bereich trichterförmig.

Eine bevorzugte Ausführungsform sieht vor, dass die Vorrichtung eine Grundfläche mit einem Durchmesser beziehungsweise einer mittleren Querschnittslänge aufweist, der beziehungsweise die kleiner als das 1-fache, bevorzugt kleiner als das 0,8-fache und weiter bevorzugt kleiner als das 0,6-fache, der Höhe der Innengeometrie ist.

Eine weitere bevorzugte Ausführungsform sieht vor, dass eine Öffnung der Gasabführung in Schwerkraftrichtung oberhalb einer Öffnung der Gaszuführung angeordnet ist. Eine derartige Anordnung der Gasabführung relativ zur Gaszuführung ermöglicht eine besonders effektive Trennung des Naturkautschuks von den Verunreinigungen aufgrund der sich einstellenden vorteilhaften Durchströmung der Vorrichtung, da hierdurch eine Trennung aufgrund der Dichte-, Massen- und Größenunterschiede besonders effektiv ist.

Eine weitere bevorzugte Ausführungsform sieht vor, dass die Gasabführung einen Durchmesser oder eine mittlere Querschnittsfläche aufweist, der oder die gleich oder kleiner als das 1-fache, bevorzugt kleiner als das 0,8-fache, besonders bevorzugt kleiner als das 0,6-fache des Durchmessers oder der mittleren Querschnittsfläche der Vorrichtung ist. Es hat sich als vorteilhaft erwiesen die Querschnittsfläche der Gasabführung zum Ausbilden eines geeigneten Gasstroms kleiner als die Querschnittsfläche der Vorrichtung vorzusehen.

Eine weitere bevorzugte Ausführungsform sieht vor, dass die Gasabführung an einen Unterdruckerzeuger zum Erzeugen eines Unterdrucks angeschlossen ist. Es hat sich als vorteilhaft herausgestellt, einen Unterdruck an der Gasabführung zu erzeugen, um die Durchströmung auszubilden, da hierdurch eine besonders effektive Entfernung der Verunreinigungen aus der Vorrichtung erreicht wird.

Eine weitere bevorzugte Ausführungsform sieht vor, dass die effektive Fläche einer Durchströmungsfläche der Gaszuführung kleiner ist als das 1-fache, bevorzugt kleiner als das 0,8-fache der mittleren Querschnittsfläche der Vorrichtung. Es hat sich als vorteilhaft erwiesen die Durchströmungsfläche der Gasabführung zum Ausbilden eines geeigneten Gasstroms kleiner als die Querschnittsfläche der Vorrichtung vorzusehen.

Eine weitere bevorzugte Ausführungsform sieht vor, dass der Mechanismus mittels einer Welle mit dem Motor verbunden ist, wobei die Welle bevorzugt koaxial zu der Symmetrieachse der Vorrichtung ausgerichtet ist. Eine Welle ermöglicht in einfacher Form den Mechanismus zuverlässig und mit hoher Leistung anzutreiben. Eine koaxiale Anordnung in der Vorrichtung ermöglicht eine effektive Abtrennung der Verunreinigungen, da Bereiche mit besonders geringen Bewegungen minimiert werden.

Eine weitere bevorzugte Ausführungsform sieht vor, dass der Mechanismus ein rotierendes Werkzeug ist, das dazu eingerichtet ist mechanische Impulse auf den Naturkautschuk mit den Verunreinigungen auszuüben. Dieser Mechanismus hat sich als besonders geeignet erwiesen, um am Naturkautschuk in schonender Weise neue Oberflächen zu erzeugen und Verunreinigungen effektiv durch die Vorrichtung zu befördern. Fördert der Mechanismus die Verunreinigungen in die Richtung oder den Bereich der Gasabführung kann hierdurch das Entfernen der Verunreinigungen aus der Vorrichtung unterstützt werden.

Eine weitere bevorzugte Ausführungsform sieht vor, dass die Position und beziehungsweise oder die Durchströmung der Öffnung der Gasabführung und beziehungsweise oder der Gaszuführung und beziehungsweise oder die Geometrie und beziehungsweise oder die Rotationsgeschwindigkeit des Mechanismus einstellbar ist. Eine Einstellbarkeit der oben genannten Mittel oder Parameter ermöglicht in einfacher Weise die Trennvorrichtung an unterschiedliche Qualitäten von Naturkautschuk und an unterschiedliche Ausprägungen von Verunreinigungen anzupassen. Die Durchströmung der Vorrichtung sowie die Rotationsgeschwindigkeit und die Geometrie des Mechanismus ist bevorzugt während des Betriebes der Trennvorrichtung einstellbar.

Eine weitere bevorzugte Ausführungsform sieht vor, dass die Trennvorrichtung dazu eingerichtet ist Verunreinigungen kontinuierlich während des Betreibens der Trennvorrichtung abzuführen. Ein kontinuierliches Abführen der Verunreinigungen verringert den Anteil der Verunreinigungen in der Vorrichtung bereits während des Trennvorgangs. Ein erneutes Anhaften von Verunreinigungen am Naturkautschuk wird hierdurch effektiv verringert. Weiterhin kann durch den kontinuierlichen Gasstrom die Durchmischung des Naturkautschuks in der Vorrichtung unterstützt werden, wodurch eine besonders effektive Trennung ermöglicht wird.

Eine weitere bevorzugte Ausführungsform sieht vor, dass die Vorrichtung demontierbar ist, wobei die Vorrichtung bevorzugt eine entfernbare obere Grundfläche und beziehungsweise oder eine entfernbare untere Grundfläche aufweist und beziehungsweise oder in mehrere Teilbereiche demontierbar ist. Eine Demontierbarkeit der Vorrichtung hat sich insbesondere für Reinigungs- und Wartungszwecke als vorteilhaft erwiesen.

Erfindungsgemäß ist ein Verfahren zum Betreiben einer Trennvorrichtung, bevorzugt einer erfindungsgemäßen Trennvorrichtung mit den folgenden Schritten vorgesehen:
a) Befüllen einer Vorrichtung mit Naturkautschuk aus Pflanzenmaterial und im Naturkautschuk enthaltenden Verunreinigungen,
b) Antreiben eines Mechanismus zum Erzeugen neuer Oberflächen am Naturkautschuk und Befördern der Verunreinigungen innerhalb der Vorrichtung,
c) Abführen eines Gases aus der Vorrichtung unter Ausbildung eines Gasstroms, wobei Verunreinigungen mit dem Gas abgeführt werden,
d) Entnehmen des gereinigten Naturkautschuks aus der Vorrichtung.

Das Verfahren ermöglicht ein effektives sowie schonendes Trennen des Naturkautschuks von Verunreinigungen, indem durch den Mechanismus zum Abtrennen der Verunreinigungen neue Oberflächen am Naturkautschuk ausgebildet werden und die Verunreinigungen in der Vorrichtung befördert werden, wo die Verunreinigungen, bevorzugt zeitgleich, aus der Vorrichtung abgeführt werden.

Eine bevorzugte Ausführungsform sieht vor, dass das Abführen des Gases aus der Vorrichtung zeitgleich mit dem Antreiben des Mechanismus durchgeführt wird. Ein Antreiben des Mechanismus zeitgleich mit einem Abführen eines Gases führt vorteilhafterweise dazu, dass das Gemisch durch den Mechanismus und zusätzlich durch den Gasstrom befördert wird.

Eine bevorzugte Ausführungsform sieht vor, dass ein Gasstrom, mit einer vertikalen Komponente entgegen der Schwerkraftrichtung g ausgebildet wird. Hierdurch wird eine Abtrennung der Verschmutzungen auch anhand des Strömungswiderstands und der Masse der Verschmutzungen durchführbar. Eine zusätzliche Durchmischung des Naturkautschuks während des Betreibens des Mechanismus verbessert die Effizienz des Verfahrens.

Erfindungsgemäß ist von Verunreinigungen getrennter Naturkautschuk aus Pflanzenmaterial, von Verunreinigungen getrennt durch ein erfindungsgemäßes Verfahren, und bevorzugt getrennt mit einer erfindungsgemäßen Trennvorrichtung vorgesehen. Derartig von Verunreinigungen getrennter Naturkautschuk lässt sich effektiv gewinnen und weist aufgrund des Trennverfahrens eine besonders hohe Reinheit sowie eine besonders hohe Qualität auf.

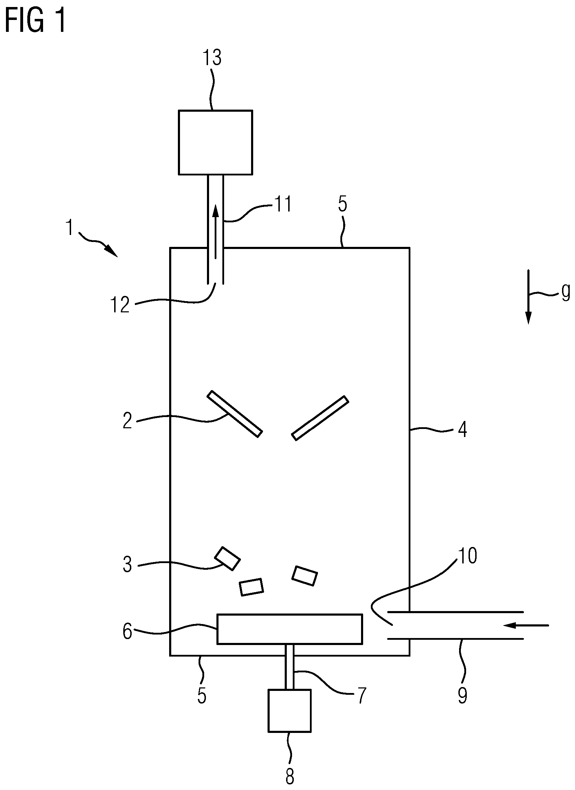

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
Fig. 1 eine Trennvorrichtung zum Abtrennen von Verunreinigungen.

Figur 1 zeigt eine Trennvorrichtung 1 zum Abtrennen von Verunreinigungen 2, die in Naturkautschuk 3 aus Pflanzenmaterial enthalten sind. Die Trennvorrichtung 1 weist eine Vorrichtung 4 auf, die eine zylinderförmige Geometrie hat und dazu eingerichtet ist im Betrieb auf einer der Grundflächen 5 der zylinderförmigen Geometrie gelagert zu werden. Koaxial zu der Vorrichtung 4 ist ein Mechanismus 6 in der Vorrichtung 4 angeordnet, dass mittels einer Welle 7 von einem Motor 8 mit variabler Drehzahl angetrieben wird.

Auf der Höhe des Mechanismus 6 ist eine Gaszuführung 9 tangential zur Vorrichtung 4 angeordnet. Die Öffnung 10 der Gaszuführung 9 ist derart angeordnet, dass das einströmende Gas überwiegend in die Richtung strömt, in die der Mechanismus 6 im Bereich der Gaszuführung 9 rotiert.

Eine Gasabführung 11 mit einer nach unten ausgerichteten Öffnung 12 ragt durch eine oben angeordnete Grundfläche 5 in den oberen Bereich der Vorrichtung 4. Wobei unter nach unten ausgerichtet der Schwerkraft g folgend verstanden wird.

Die Gasabführung 11 wird durch einen Unterdruckerzeuger 13 mit Unterdruck beaufschlagt. Die Gasabführung 11 ist verfahrbar zur Vorrichtung 4 gelagert, so dass die Öffnung 12 in der Höhe der Vorrichtung 4 sowie radial zur Vorrichtung 4 variabel, beziehungsweise an mehreren Positionen, positioniert werden kann.

Der Naturkautschuk 3 mit enthaltenden Verunreinigungen 2 wird in die Vorrichtung 4 befördert. Hierzu wird die oben angeordnete Grundfläche 5 von der restlichen Vorrichtung 4 entfernt und die Vorrichtung 4 mit Naturkautschuk 3 befüllt. Nach dem Verschließen der Vorrichtung 4 mit der oben angeordneten Grundfläche 5 wird der Unterdruckerzeuger gestartet zum Ausbilden eines Gasstroms von der Öffnung 10 der Gaszuführung 9 zu der Öffnung 12 der Gasabführung 11. Der Motor 8 treibt den Mechanismus 6 an, wobei der Mechanismus 6 Impulse auf den Naturkautschuk 3 sowie auf die Verunreinigungen 2 überträgt. Der Mechanismus 6 erzeugt neue Oberflächen des Naturkautschuks 3 und legt dadurch Verunreinigung frei. Weiterhin befördert der Mechanismus 6 durch die Impulse die Verunreinigungen 2 entgegen der Schwerkraft g nach oben in den Bereich der Öffnung 12 der Gasabführung 11. Der ausgebildete Gasstrom unterstützt die Beförderung der Verunreinigungen 2 zu der Öffnung 12.

Selbst bei gleicher oder zumindest ähnlicher Dichten des Naturkautschuks 3 und der Verunreinigungen 2 findet eine effektive Trennung der Verunreinigungen 2 vom Naturkautschuk 3 aufgrund der erzeugten Kräfte statt. Der Naturkautschuk 3 wird, insbesondere in Bereichen mit Verunreinigungen 2, aufgerissen und bildet dabei neue Oberflächen aus, von denen die Verunreinigungen durch die vorherrschenden Gasströmungen entfernt werden. Der ausgebildete Gasstrom überträgt auf die Verunreinigungen eine größere Kraft relativ zu ihrer Masse, soweit die Verunreinigungen aufgrund ihrer Geometrie ein größeres Oberflächen-zu-Volumen-Verhältnis aufweisen.

Die Verunreinigungen 2 werden durch die Öffnung 12 aus der Vorrichtung 4 abgesaugt. Der Motor 8 sowie der Unterdruckerzeuger 13 werden ausgeschaltet und der von den Verunreinigungen 2 getrennte Naturkautschuk 3 wird aus der Vorrichtung 4 entnommen.

### Bezugszeichenliste

- 1: Trennvorrichtung
- 2: Verunreinigung
- 3: Naturkautschuk
- 4: Vorrichtung
- 5: Grundfläche

- 6: Mechanismus
- 7: Welle
- 8: Motor
- 9: Gaszuführung
- 10: Öffnung (Gaszuführung)

- 11: Gasabführung
- 12: Öffnung (Gasabführung)
- 13: Unterdruckerzeuger

- g: Schwerkraft

## Patentansprüche

1. Trennvorrichtung (1) zum Abtrennen von an Naturkautschuk (3) aus Pflanzenmaterial enthaltenden Verunreinigungen (2) mit einer Vorrichtung (4) zur Aufnahme des Naturkautschuks (3) mit den enthaltenden Verunreinigungen (2), wobei die Vorrichtung (4) einen Mechanismus (6) aufnimmt, wobei der Mechanismus (6) von einem Motor (8) der Trennvorrichtung (1) angetrieben wird, und einer Gaszuführung (9) und einer Gasabführung (11) zum Erzeugen einer Durchströmung der Vorrichtung (4) mit einem Gas und zum Abführen der Verunreinigungen (2), wobei der Mechanismus (6) dazu eingerichtet ist die Verunreinigungen (2) innerhalb der Vorrichtung zu fördern.

2. Trennvorrichtung (1) nach Anspruch 1, **dadurch gekennzeichnet, dass** es sich bei dem Naturkautschuk aus Pflanzenmaterial von Pflanzen handelt, die Mitglieder der Asteraceae, wie Taraxacum sp. oder Scorzonera sp., insbesondere Taraxacum kok-saghyz, Taraxacum krim-saghyz, Taraxacum bicorne, Taraxacum brevicorniculatum, oder Scorzonera tau-saghyz, Scorzonera Uzbekistanica, Scorzonera teke-saghyz, Scorzonera hispanica, Scorzonera tausaghyz, oder Guayule (Parthenium argentatum), oder auch andere Spezies wie Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense, oder Silphium sp., oder Mischungen dieser Pflanzen sowie natürlich vorkommende oder gezüchtete Hybride mit mindestens einer der vorgenannten Spezies sind, wobei als Hybride alle Ausprägungsformen mischerbiger Pflanzen anzusehen sind.

3. Trennvorrichtung (1) nach den Ansprüchen 1 oder 2, **dadurch gekennzeichnet, dass** es sich bei dem Naturkautschuk aus Pflanzenmaterial um Naturkautschuk mit einem Trockenrückstand von größer als 0,7 handelt, besonders bevorzugt größer als 0,8 handelt.

4. Trennvorrichtung (1) nach einem der vorangehenden Ansprüche, **dadurch gekennzeichnet, dass** die Vorrichtung (4) eine symmetrische, bevorzugt eine zylinderförmige und/oder trichterförmige, Innengeometrie aufweist.

5. Trennvorrichtung (1) nach einem der vorangehenden Ansprüche, **dadurch gekennzeichnet, dass** die Vorrichtung (4) eine Grundfläche (5) mit einem Durchmesser oder einer mittleren Querschnittsfläche aufweist, der oder die kleiner als das 1-fache, bevorzugt kleiner als das 0,8-fache und weiter bevorzugt kleiner als das 0,6-fache, der Höhe der Innengeometrie ist.

6. Trennvorrichtung (1) nach einem der vorangehenden Ansprüche, **dadurch gekennzeichnet, dass** eine Öffnung (12) der Gasabführung (11) in Schwerkraftrichtung (g) oberhalb einer Öffnung (10) der Gaszuführung (9) angeordnet ist.

7. Trennvorrichtung (1) nach einem der vorangehenden Ansprüche, **dadurch gekennzeichnet, dass** die Gasabführung (11) einen Durchmesser oder eine mittlere Querschnittsfläche aufweist, der oder die gleich oder kleiner als das 1-fache, bevorzugt kleiner als das 0,8-fache, besonders bevorzugt kleiner als das 0,6-fache des Durchmessers oder der mittleren Querschnittsfläche der Vorrichtung (4) ist.

8. Trennvorrichtung (1) nach einem der vorangehenden Ansprüche, **dadurch gekennzeichnet, dass** die Gasabführung (11) an einen Unterdruckerzeuger (13) zum Erzeugen eines Unterdrucks angeschlossen ist.

9. Trennvorrichtung (1) nach einem der vorangehenden Ansprüche, **dadurch gekennzeichnet, dass** die effektive Fläche einer Durchströmungsfläche der Gaszuführung (9) kleiner ist als das 1-fache, bevorzugt kleiner als das 0,8-fache der mittleren Querschnittsfläche der Vorrichtung (4).

10. Trennvorrichtung (1) nach einem der vorangehenden Ansprüche, **dadurch gekennzeichnet, dass** der Mechanismus (6) mittels einer Welle (7) mit dem Motor (8) verbunden ist, wobei die Welle (7) bevorzugt koaxial zu der Symmetrieachse der Vorrichtung (4) ausgerichtet ist.

11. Trennvorrichtung (1) nach einem der vorangehenden Ansprüche, **dadurch gekennzeichnet, dass** der Mechanismus (6) ein rotierendes Werkzeug ist, wobei das rotierende Werkzeug dazu eingerichtet ist mechanische Impulse auf den Naturkautschuk (3) mit den Verunreinigungen (2) auszuüben.

12. Trennvorrichtung (1) nach einem der vorangehenden Ansprüche, **dadurch gekennzeichnet, dass** die Position und/oder die Durchströmung der Öffnungen (10, 12) der Gasabführung (11) und/oder der Gaszuführung (9) und/oder die Geometrie und/oder die Rotationsgeschwindigkeit des Mechanismus (6) einstellbar ist.

13. Trennvorrichtung (1) nach einem der vorangehenden Ansprüche, **dadurch gekennzeichnet, dass** die Trennvorrichtung (1) dazu eingerichtet ist Verunreinigungen (2) kontinuierlich während des Betreibens der Trennvorrichtung abzuführen.

14. Trennvorrichtung (1) nach einem der vorangehenden Ansprüche, **dadurch gekennzeichnet, dass** die Vorrichtung (4) demontierbar ist, wobei die Vorrichtung (4) bevorzugt eine entfernbare obere Grundfläche und/oder eine entfernbare untere Grundfläche aufweist und/oder in mehrere Teilbereiche demontierbar ist.

15. Verfahren zum Betreiben einer Trennvorrichtung (1), bevorzugt mit einer Trennvorrichtung (1) nach einem der vorangehenden Ansprüche mit den Schritten:
a) Befüllen einer Vorrichtung (4) mit Naturkautschuk (3) aus Pflanzenmaterial und im Naturkautschuk (3) enthaltenden Verunreinigungen (2),
b) Antreiben eines Mechanismus (6) zum Erzeugen neuer Oberflächen am Naturkautschuk (3) und Befördern der Verunreinigungen (2) innerhalb der Vorrichtung (4),
c) Abführen eines Gases aus der Vorrichtung (4) unter Ausbildung eines Gasstroms, wobei Verunreinigungen (2) mit dem Gas abgeführt werden,
d) Entnehmen des gereinigten Naturkautschuks (3) aus der Vorrichtung (4).

16. Verfahren nach Anspruch 15, wobei das Abführen des Gases aus der Vorrichtung (4) zeitgleich mit dem Antreiben des Mechanismus durchgeführt wird,

17. Verfahren nach Anspruch 15 oder 16, wobei ein Gasstrom mit einer vertikalen Komponente entgegen der Schwerkraftrichtung g ausgebildet wird.

18. Von Verunreinigungen (2) getrennter Naturkautschuk (3) aus Pflanzenmaterial, von Verunreinigungen (2) getrennt durch ein Verfahren nach einem der Ansprüche 15 bis 17 und bevorzugt getrennt mit einer Trennvorrichtung (1) nach einem der Ansprüche 1 bis 14.

## Claims

1. Separating device (1) for separating impurities (2) containing natural rubber (3) from plant material, having a device (4) for receiving the natural rubber (3) containing impurities (2), wherein the device (4) receives a mechanism (6), wherein the mechanism (6) is driven by a motor (8) of the separating device (1), and a gas supply (9) and a gas discharge (11) for generating a flow through the device (4) with a gas and for discharging the impurities (2), the mechanism (6) is specified to convey the impurities (2) within the device.

2. Separating device (1) according to Claim 1, **characterized in that** the natural rubber is plant material from plants which are members of the Asteraceae, such as Taraxacum sp. or Scorzonera sp., in particular Taraxacum kok-saghyz, Taraxacum krim-saghyz, Taraxacum bicorne, Taraxacum brevicorniculatum, or Scorzonera tau-saghyz, Scorzonera Uzbekistanica, Scorzonera teke-saghyz, Scorzonera hispanica, Scorzonera tausaghyz, or guayule (Parthenium argentatum), or else other species such as Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense, or Silphium sp., or mixtures of these plants and also naturally occurring or cultivated hybrids of at least one of the aforementioned species, wherein hybrids are to be understood as meaning all manifestations of heterozygous plants.

3. Separating device (1) according to Claims 1 and 2, **characterized in that** the natural rubber from plant material is natural rubber with a dry residue of more than 0.7, particularly preferably more than 0.8.

4. Separating device (1) according to one of the preceding claims, **characterized in that** the device (4) has a symmetrical, preferably a cylindrical and/or funnel-shaped, internal geometry.

5. Separating device (1) according to one of the preceding claims, **characterized in that** the device (4) has a base area (5) with a diameter or a mean cross-sectional area which is smaller than 1 times, preferably smaller than 0.8 times, and furthermore preferably smaller than 0.6 times, the height of the internal geometry.

6. Separating device (1) according to one of the preceding claims, **characterized in that** an opening (12) of the gas discharge (11) is disposed in the direction of gravity (g) above an opening (10) of the gas supply (9).

7. Separating device (1) according to one of the preceding claims, **characterized in that** the gas discharge (11) has a diameter or a mean cross-sectional area equal to or smaller than 1 times, preferably smaller than 0.8 times, particularly preferably smaller than 0.6 times, the diameter or the mean cross-sectional area of the device (4).

8. Separating device (1) according to one of the preceding claims, **characterized in that** the gas discharge (11) is connected to a vacuum generator (13) for generating a vacuum.

9. Separating device (1) according to one of the preceding claims, **characterized in that** the effective area of a flow surface of the gas supply (9) is smaller than 1 times, preferably smaller than 0.8 times, the mean cross-sectional area of the device (4).

10. Separating device (1) according to one of the preceding claims, **characterized in that** the mechanism (6) is connected to the motor (8) by means of a shaft (7), wherein the shaft (7) is preferably aligned coaxially with the axis of symmetry of the device (4).

11. Separating device (1) according to one of the preceding claims, **characterized in that** the mechanism (6) is a rotating tool, wherein the rotating tool is specified to exert mechanical impulses on the natural rubber (3) with the impurities (2).

12. Separating device (1) according to one of the preceding claims, **characterized in that** the position and/or the flow through the openings (10, 12) of the gas discharge (11) and/or the gas supply (9) and/or the geometry and/or the rotation speed of the mechanism (6) is adjustable.

13. Separating device (1) according to one of the preceding claims, **characterized in that** the separating device (1) is designed to discharge impurities (2) continuously during operation of the separating device.

14. Separating device (1) according to one of the preceding claims, **characterized in that** the device (4) is able to be disassembled, wherein the device (4) preferably has a removable upper base area and/or a removable lower base area and/or is able to be disassembled so as to form a plurality of sub-regions.

15. Method for operating a separating device (1), preferably having a separating device (1) according to one of the preceding claims, comprising the following steps:
a) filling a device (4) with natural rubber (3) from plant material and impurities (2) contained in the natural rubber (3),
b) driving a mechanism (6) for generating new surfaces on natural rubber (3) and conveying impurities (2) within the device (4),
c) discharging a gas from the device (4) while forming a gas stream, wherein impurities (2) are discharged with the gas,
d) removing the purified natural rubber (3) from the device (4).

16. Method according to Claim 15, wherein the removal of the gas from the device (4) is carried out simultaneously with the driving of the mechanism.

17. Method according to Claim 15 or 16, wherein a gas stream having a vertical component counter to the direction of gravity g is formed.

18. Natural rubber (3) of plant material which has been separated from impurities (2), the impurities (2) being separated by a method according to one of Claims 15 to 17 and preferably separated using a separating device (1) according to one of Claims 1 to 14.

## Revendications

1. Dispositif de séparation (1) pour séparer des impuretés (2) contenues dans du caoutchouc naturel (3) issu de matière végétale, comprenant un dispositif (4) destiné à recevoir le caoutchouc naturel (3) avec les impuretés (2) contenues, le dispositif (4) recevant un mécanisme (6), le mécanisme (6) étant entraîné par un moteur (8) du dispositif de séparation (1), et une alimentation en gaz (9) et une évacuation de gaz (11) destinées à générer un courant gazeux à travers le dispositif (4) et à évacuer les impuretés (2), le mécanisme (6) étant conçu pour transporter les impuretés (2) à l'intérieur du dispositif.

2. Dispositif de séparation (1) selon la revendication 1, **caractérisé en ce que** le caoutchouc naturel issu de matière végétale provient de plantes qui sont membres des Asteraceae, telles que Taraxacum sp. ou Scorzonera sp., en particulier Taraxacum kok-saghyz, Taraxacum krim-saghyz, Taraxacum bicorne, Taraxacum brevicorniculatum ou Scorzonera tau-saghyz, Scorzonera uzbekistanica, Scorzonera teke-saghyz, Scorzonera hispanica, Scorzonera tausaghyz ou Guayule (Parthenium argentatum) ou également d'autres espèces telles que Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense ou Silphium sp. ou de mélanges de ces plantes ainsi que des hybrides naturels ou cultivés avec au moins l'une des espèces précitées, toutes les formes d'expression de plantes hétérozygotes étant à considérer comme hybrides.

3. Dispositif de séparation (1) selon la revendication 1 ou 2, **caractérisé en ce que** le caoutchouc naturel issu de matière végétale est un caoutchouc naturel présentant un résidu sec supérieur à 0,7, de manière particulièrement préférée, supérieur à 0,8.

4. Dispositif de séparation (1) selon l'une quelconque des revendications précédentes, **caractérisé en ce que** le dispositif (4) présente une géométrie intérieure symétrique, de préférence cylindrique et/ou en forme d'entonnoir.

5. Dispositif de séparation (1) selon l'une quelconque des revendications précédentes, **caractérisé en ce que** le dispositif (4) présente une surface de base (5) ayant un diamètre ou une surface de section transversale moyenne qui est inférieur à 1 fois, de préférence inférieur à 0,8 fois et de manière particulièrement préférée inférieur à 0,6 fois la hauteur de la géométrie intérieure.

6. Dispositif de séparation (1) selon l'une quelconque des revendications précédentes, **caractérisé en ce qu'**une ouverture (12) de l'évacuation de gaz (11) est disposée au-dessus d'une ouverture (10) de l'alimentation en gaz (9) dans la direction de la gravité (g).

7. Dispositif de séparation (1) selon l'une quelconque des revendications précédentes, **caractérisé en ce que** l'évacuation de gaz (11) présente un diamètre ou une surface de section transversale moyenne qui est égal ou inférieur à 1 fois, de préférence inférieur à 0,8 fois, et de manière particulièrement préférée, inférieur à 0,6 fois le diamètre ou la surface de section transversale moyenne du dispositif (4).

8. Dispositif de séparation (1) selon l'une quelconque des revendications précédentes, **caractérisé en ce que** l'évacuation de gaz (11) est raccordée à un générateur de dépression (13) destiné à générer une dépression.

9. Dispositif de séparation (1) selon l'une quelconque des revendications précédentes, **caractérisé en ce que** la surface effective d'une surface de passage de flux de l'alimentation en gaz (9) est inférieure à 1 fois, de préférence inférieure à 0,8 fois la surface de section transversale moyenne du dispositif (4).

10. Dispositif de séparation (1) selon l'une quelconque des revendications précédentes, **caractérisé en ce que** le mécanisme (6) est relié au moteur (8) au moyen d'un arbre (7), l'arbre (7) étant de préférence orienté de manière coaxiale par rapport à l'axe de symétrie du dispositif (4).

11. Dispositif de séparation (1) selon l'une quelconque des revendications précédentes, **caractérisé en ce que** le mécanisme (6) est un outil rotatif, l'outil rotatif étant conçu pour exercer des impulsions mécaniques sur le caoutchouc naturel (3) avec les impuretés (2).

12. Dispositif de séparation (1) selon l'une quelconque des revendications précédentes, **caractérisé en ce que** la position et/ou le passage de flux des ouvertures (10, 12) de l'évacuation de gaz (11) et/ou de l'alimentation en gaz (9) et/ou la géométrie et/ou la vitesse de rotation du mécanisme (6) sont réglables.

13. Dispositif de séparation (1) selon l'une quelconque des revendications précédentes, **caractérisé en ce que** le dispositif de séparation (1) est conçu pour évacuer des impuretés (2) en continu pendant le fonctionnement du dispositif de séparation.

14. Dispositif de séparation (1) selon l'une quelconque des revendications précédentes, **caractérisé en ce que** le dispositif (4) est démontable, le dispositif (4) présentant de préférence une surface de base supérieure amovible et/ou une surface de base inférieure amovible et/ou pouvant être démonté en plusieurs zones partielles.

15. Procédé d'exploitation d'un dispositif de séparation (1), de préférence à l'aide d'un dispositif de séparation (1) selon l'une quelconque des revendications précédentes, comprenant les étapes suivantes :
a) remplissage d'un dispositif (4) avec du caoutchouc naturel (3) issu de matière végétale et avec des impuretés (2) contenues dans le caoutchouc naturel (3),
b) entraînement d'un mécanisme (6) destiné à générer de nouvelles surfaces sur le caoutchouc naturel (3) et à transporter les impuretés (2) à l'intérieur du dispositif (4),
c) évacuation d'un gaz hors du dispositif (4) en formant un courant gazeux, des impuretés (2) étant évacuées avec le gaz,
d) extraction du caoutchouc naturel purifié (3) du dispositif (4).

16. Procédé selon la revendication 15, dans lequel l'évacuation du gaz hors du dispositif (4) est effectuée en même temps que l'entraînement du mécanisme.

17. Procédé selon la revendication 15 ou 16, dans lequel un courant gazeux est formé avec une composante verticale opposée à la direction de la gravité g.

18. Caoutchouc naturel (3) issu de matière végétale séparé des impuretés (2), ayant été séparé des impuretés (2) par un procédé selon l'une quelconque des revendications 15 à 17 et de préférence séparé à l'aide d'un dispositif de séparation (1) selon l'une quelconque des revendications 1 à 14.
